# EUROPEAN PATENT APPLICATION

(11) **EP 3 961 330 A1**
(43) Date of publication of application: **02.03.2022**
(21) Application number: 21189766.5
(22) Date of filing: 05.08.2021
(51) Int. Cl.: G05B 19/418, G06Q 10/06, G06N 3/08

(54) **ASSEMBLY ASSISTANCE DEVICE AND METHOD**

(30) Priority: 27.08.2020 EP 20193181
(71) Applicant: Omron Europe B.V., 2132 JD Hoofddorp (NL)
(72) Inventor: STELLAS, Antonis, 5234 GM 's-Hertogenbosch (NL)
(74) Representative: Horn Kleimann Waitzhofer Patentanwälte PartG mbB

(57) **Abstract**

An assembly assistance device for providing an assembling device with an assembly instruction set, the assembly assistance device comprising:
a generation device configured to generate a plurality of preliminary instruction sets based on product data indicating a type and amount of at least some components to be assembled into a product, each preliminary instruction set defining a different assembly process for assembling the components into the product;
a sensor device configured to measure sensor data characterizing the assembly process according to each preliminary instruction set; and
an assistance device configured to use an artificial intelligence method to select an optimized assembly instruction set such that an amount of resources required when assembling the product according to the optimized assembly instruction set is reduced.

## Description

The present invention relates to an assembly assistance device for providing a user or an assembly device with an assembly instruction set. Further, the present invention relates to an assembly device and to a method for providing an assembly instruction set.

In the industrial context, it is common to assemble multiple components into a product. The assembly process can be performed by a user, by a user assisted by an assembling device (as for example described in EP 3 647 890 A1) or autonomously by an assembling device. In order to correctly assemble the components into the product, the user and/or the assembling device may follow an assembly instruction set defining a sequence of assembly steps of the assembly process. It can be desirable to improve or optimize the assembly instruction set.

In this regard, US 2019/0236472 A1 suggests observing actual measurement data of two workpieces to be assembled. The actual measurement data is used to construct an estimation model based on machine learning to estimate future assembly parameters. Accordingly, subsequent assembly steps are adapted.

US 2018/0027218 A1 discloses a work assistance device which optimizes the working time of a worker by storing different instructions for different users. Further, US 2019/0163428 A1 discloses a manufacturing assistance device which determines whether a preprogrammed assembly step is finished.

US 10 481 579 B1 discloses an assembly line comprising a first image capture device disposed at a first station in the assembly line. The images captured by the first image capture device are used to detect errors in a manufacturing work-flow and to provide instructions to rectify detected errors or to improve the product of manufacture.

US 2018/180085 A1 discloses a machine learning device including a state observation unit for observing state variables that include at least one of the state of an assembly constituted of first and second components, an assembly time and information on a force, the result of a continuity test on the assembly, and at least one of position and posture command values for at least one of the first and second components and direction, speed and force command values for an assembly operation; and a learning unit for learning, in a related manner, at least one of the state of the assembly, the assembly time and the information on the force, the result of the continuity test on the assembly, and at least one of the position and posture command values for at least one of the first and second components and the direction, speed and force command values for the assembly operation.

The article "A framework for the evaluation and selection of assembly plans" (Jong Hun Park et al., Proceedings of the international conference on industrial electronics, control and instrumentation, 1991) discloses criteria for evaluation of assembly plans.

The article "Integrated sensor-based control system for a flexible assembly cell" (by Najjari H. et al. in Mechatronics, Pergamon press, 1997) discloses a control system for a flexible assembly cell.

WO 2019/243798 A1 discloses a workbench system comprising: a workbench; a sensor system comprising one or more sensors, the sensor system configured to identify a user in a workspace in which the workbench is located; a controller operatively coupled to the sensor system and configured to: based on the identity of the user, determine a task to be performed by the user using the workbench system; and based on the identity of the user and the determined task, control one or more properties of the workbench.

DE 41 27 809 A1 discloses an arrangement for displaying a process of composing an image of an object made up of graphic elements to form a dynamic image sequence from the coordinate information of desired corresponding object points.

It is one object of the present invention to provide an improved assembly assistance device.

According to a first aspect, an assembly assistance device for providing a user and/or an assembling device with an assembly instruction set is provided, the assembly instruction set defining a sequence of assembly steps of an assembly process according to which the user and/or the assembling device is configured to assemble components into a product. The assembly assistance device comprises:
a generation device configured to generate a plurality of preliminary instruction sets based on product data indicating a type and amount of at least some of the components to be assembled into the product, each preliminary instruction set defining a different assembly process for assembling the components into the product;
a sensor device configured to measure sensor data characterizing the assembly process of the components into the product according to each respective preliminary instruction set from the plurality of preliminary instruction sets; and
an assistance device configured to use an artificial intelligence method to analyze an amount of resources required to assemble the components into the product according to each respective preliminary instruction set based on the sensor data and to select an optimized assembly instruction set from the preliminary instruction sets and the corresponding analysis of the required amount of resources such that an amount of resources required when assembling the product according to the optimized assembly instruction set is reduced.

The assembly assistance device learns optimal assembly strategies for a product. The assembly assistance device allows the generation of an optimized assembly instruction set, which can be used to reach higher efficiency in product assembly. In particular, using the optimized assembly instruction set, products are assembled faster and with fewer mistakes than with other assembly instruction sets.

In summary, the assembly assistance device is capable of: (i) generating multiple preliminary instruction sets using the generation device, (ii) gathering sensor data for each of these preliminary instruction sets (preferably using different boundary conditions, such as different operators, different tools and the like) using the sensor device, and (iii) using the assistance device, training an artificial intelligence method using the preliminary instruction sets and the corresponding sensor data as training data such that the artificial intelligence method can determine, for a particular use case (in particular, for a predetermined input data), which preliminary instruction set reduces the amount of required resources and sets this preliminary instruction set as the optimized instruction set.

The product to be assembled may be any product with multiple components, such as a processor, a computer, a car, an electric circuit, a piece of furniture, parts of the previous cited elements or the like. The components can be any type of elements, and in particular include mechanical parts, electrical elements and/or chemicals. The assembly of the components into the product can include steps such as screwing, gluing, clipping, welding, stacking, mixing, soldering and the like.

In order to assemble the components into the product, there may be multiple possible assembly processes defined by the assembly instruction sets. In particular, the assembly instruction sets for example define an order of assembly of the components, which assembling elements (screws, glue, solder and the like) are used and/or quantities thereof, whether multiple components are assembled simultaneously, how a user's hand or a tool should be positioned to assemble the components and/or how the components should be positioned to be assembled. Different assembly instruction sets can be permutations of individual assembly steps for assembling the components into the product. The assembly instruction sets can be thought of as recipes to assemble the components into the product. The optimized assembly instruction set and the preliminary instruction sets are assembly instruction sets.

The assembly device may autonomously assemble the components into the product based on the assembly instruction set. The assembly device can be a robot, for example an industrial robot, or an assembly machine. The assembly instruction sets can be provided as a program to the assembly device. If provided to a human user, the assembly instructions can be provided in an understandable language such as "place screw X into hole Y of component Z".

The generation device can create new assembly instruction sets. The generation device may generate the preliminary instruction sets autonomously. The preliminary instruction sets are generated based on product data, which for example include constraints for building the product, constraints of the components, properties of the components, a list of the available components and the like.

The preliminary instruction sets may then be tested by assembling components in accordance with the different preliminary instruction sets. In particular, one of several product assemblies are performed for each preliminary instruction set. Meanwhile, the sensor device may observe these assemblies by measuring sensor data characterizing each of the assembly processes. In other words, the sensor device can collect data relating to each preliminary instruction set.

The assistance device uses the sensor data and the preliminary instruction sets in an artificial intelligence algorithm to generate an optimized assembly instruction set based thereon, namely to select one of the preliminary instruction sets as the optimized assembly instruction set.

In detail, the assistance device is configured to use the artificial intelligence method to determine, for a predefined use case (for predefined input data), one of the preliminary instruction sets as an optimized instruction set, wherein the artificial intelligence method is trained using the preliminary instruction sets and the corresponding sensor data as an input data, the optimized instruction set being the preliminary instruction set for which an amount of resources required to assemble the components into the product is reduced.

The artificial intelligence method (algorithm) may be a machine learning algorithm, in particular a reinforcement learning algorithm. The artificial intelligence method may include a decision tree and/or a reward calculation allowing to determine the quantity of resources and accordingly determine the optimized instruction set. Other artificial intelligence methods may also be used.

Generally speaking, the training of the artificial intelligence algorithm allows finding patterns between the preliminary instruction sets and the resources. Based on these patterns, the artificial intelligence algorithm analyses the quality of the individual preliminary instruction sets by analyzing the amount of resources necessary for a particular preliminary instruction set based on the sensor data measured by the sensor device for a product assembled according to this preliminary instruction set. For example, analyzed resources can be how long it takes to assemble the product and how many errors are made. Based on the analyzed amount of resources, the assistance device determines the optimized assembly instruction set.

The artificial intelligence algorithm may further be regularly and/or constantly improved using a feedback by a user, for example.

The generation device, the sensor device and the assistance device may be used to each respectively operate one mode of the assembly assistance device. In particular, the three devices (and the three modes) are not directly intertwined. This in particular means that they each receive different inputs and outputs. Further, the three devices (modes) are each optimized to perform their own task only. Separating the tasks of the assembly assistance device in three parts corresponding to the three devices is optimal in view of resource optimization, performance and/or communication of the assembly assistance device. In detail, each of the three devices may utilize different resources (CPU, power, input/output operations, processing speed and the like), perform different usage of the resources and a different model. For example, the generation device may use a digital twin to create preliminary instruction sets while the assistance device may use an industrial PC. In other word, the generation device, the sensor device and the assistance device may be part of different (in particular separated) computer entities.

To create an optimized assembly instruction set, the generated preliminary instruction sets and the sensor data preferably satisfy high requirements regarding diversity, quantity and quality. Diversity in particular means that preliminary instruction sets are varied and greatly distinguish from one another. Quantity in particular means that many assembly processes using the preliminary instructions sets should be observed to obtain large quantities of sensor data. Quality in particular means that the information regarding the preliminary instruction sets and the sensor data is correct and should not comprise any mistakes.

The generation device, the sensor device and the assistance device can be provided as hardware and/or software entities. The instruction sets (preliminary instruction sets and optimized assembly instruction set) can be either generated in a machine-readable format and/or in a human (user) readable format. In the human-readable format, the instruction sets can include text elements, image elements and/or video elements. Further, machine-readable instruction sets can be converted into human-readable instruction sets prior to outputting the instruction sets in order to output human-readable instructions sets to the user.

As compared to a case in which a single preliminary instruction set is considered to optimize the instruction set, using multiple preliminary instruction sets and analyzing these is advantageous in that a better optimized instruction set can be obtained because larger data quantities and their influences can be taken into account.

According to an embodiment, the artificial intelligence method includes a trained decision tree and/or a reward calculation for determining the amount of resources required to assemble the components into the product according to each respective preliminary instruction set, and wherein the artificial intelligence method determines the optimized assembly instruction set as the preliminary instruction set for which the determined amount of resources is minimum and/or lower than a predetermined threshold.

For example, when a decision tree determining an assembly duration depending on a state of the user is used, for each preliminary instruction set, an assembly duration is determined as the required amount of resources for this preliminary instruction set. Then, the preliminary instruction set allowing the shortest assembly duration is selected as the optimized assembly instruction set, for example.

The reward calculation may be performed using a reinforcement learning algorithm. When a reinforcement learning algorithm is used, the algorithm may calculate, for each preliminary instruction set, a reward. The higher the reward, the lower the required amount of resources for this preliminary instruction set. The reinforcement learning algorithm may determine the preliminary instruction set leading to a predetermined reward and/or to the highest reward as the optimized assembly instruction set.

Examples for the training of the artificial intelligence methods are described below. The machine learning algorithm (machine learning model) can be a machine learning algorithm trained based on input data including history data indicative of (previous) preliminary instruction sets and corresponding sensor data (which allows determining an amount of required amounts of resources. The machine learning algorithm may further receive, as an input, an untrained decision tree and/or data specifying, for each preliminary instruction sets, corresponding sensor data and/or corresponding required amounts of resources, metadata (state of the user) such as a user's experience level, a number of components to be used according to the preliminary instruction set, a user's fatigue indicator, or the like. The input data for training the machine learning algorithm may be manually labeled data. The respective inputs of the training can be generated by the generation device, the sensor device and/or manually.

The machine learning algorithm can include multiple layers of nodes which are trained such that when the algorithm receives a given preliminary instructions set from the training data and the corresponding sensor data as an input, it outputs the corresponding amount of resources in a reliable manner. During the training, the machine learning algorithm in particular minimizes its loss function to provide more accurate resource quantity predictions. In particular, properties such as a duration of the assembly, a probability of a mistake assembly or the like can be predicted more accurately. The trained machine learning algorithm may allow to determine which preliminary instruction set is preferable for given user conditions as an input. The trained machine learning algorithm may be a trained decision tree allowing to determine the amount of resources required for each preliminary instruction set under consideration of the above-defined metadata, for example.

In the reinforcement learning case, the learning can additionally be performed based on additional data from a digital twin as an input data. The digital twin can be used to simulate further instruction sets and/or how a state of the user influences these further instruction sets and/or the preliminary instruction sets. In particular, in the reinforcement learning case, the desired output of the algorithm is not known. Rather, during training of the reinforcement learning algorithm, a quality of a solution is determined, for example by calculating a reward. The reward is preferably inversely proportional to the determined amount of resources (the higher the amount of resources, the lower the reward). The reward may also vary depending on other input parameters such as a state of the user (explained further below). Reinforcement learning allows reducing the quantity of input data since simulation data can easily be generated and used to perform the training of the algorithm.

According to a further embodiment, the assistance device is configured to determine the optimized assembly instruction set by selecting the preliminary instruction set which requires the smallest amount of resources when compared to all other preliminary instruction sets from the plurality of preliminary instruction sets.

In particular, the optimized assembly instruction set is the preliminary instruction set which minimizes one or multiple resources as determined by the assistance device most.

The optimized assembly instruction set may also be the preliminary instruction set which provides the best compromise between several resources. In particular, the assistance device may determine the optimized assembly instruction set as the preliminary instruction set which requires less than a first amount of a first resource, less than a second amount of a second resource and so on.

According to a further embodiment, the generation device is configured to generate the preliminary instruction sets by putting individual assembly steps from different former preliminary instruction sets together to form a new preliminary instruction set. In particular, the preliminary instruction set can be built by combining different elements of different previous preliminary instruction sets.

According to a further embodiment, the assistance device further comprises an output device for outputting the optimized assembly instruction set to the user and/or the assembling device.

If the output device outputs the optimized assembly instruction set to the user, it may be a screen, a loudspeaker, a projector or the like. If the output device outputs the optimized assembly instruction set to the assistance device, it may be an interface such as a USB port or the like for connecting to the assistance device and transferring the optimized assembly instruction set.

According to a further embodiment, the sensor device is configured to measure further sensor data characterizing an assembly of the components according to the optimized assembly instruction set and the assistance device is configured to update the optimized assembly instruction set based on the further sensor data collected by the sensor device.

The sensor data may further characterize an input data (described further below). The sensor device and the assistance device may repeatedly and/or continuously be used to update the optimized assembly instruction set. The assembly assistance device thereby learns optimal assembly strategies for a product over time. Advantageously, the optimized assembly instruction set may be improved and/or optimized more and more over time, in particular dynamically, based on the measurement of additional sensor data with the sensor device and the corresponding analysis by the assistance device. The more the assembly assistance device is used, the better the optimized assembly instruction set may become.

According to a further embodiment, the generation device is configured to generate an additional preliminary assembly instruction set, the sensor device is configured to collect additional sensor data characterizing an assembly of the components according to the additional preliminary instruction sets and the assistance device is configured to update the optimized assembly instruction set based on the additional preliminary assembly instruction set and on the additional sensor data collected by the sensor device.

The optimized assembly instruction set may be optimized or improved even further by repeatedly and/or continuously generating further preliminary instruction sets using the generation device, observing the preliminary instruction sets using the sensor device and generating a new optimized assembly instruction set using the assistance device. The generated additional preliminary assembly instruction set(s) can be generated based on the optimized assembly instruction set and/or based on previously obtained and/or analyzed sensor data. The more the assembly assistance device is used, the better the optimized assembly instruction set may become.

According to a further embodiment, the artificial intelligence method includes a machine learning method. Examples for the artificial intelligence method include neural network algorithms, decision trees and/or reinforced learning algorithms. The artificial intelligence method may further use a statistical method.

According to a further embodiment, the sensor data collected by the sensor device is an image, a video and/or a duration of one or multiple steps of the assembly of the components according to each respective preliminary instruction set from the plurality of preliminary instruction sets. The sensor device may include a camera, a video camera, a chronometer or the like.

According to a further embodiment, the resources include: an assembly time for assembling the product, an amount of electrical energy required to assembly the product, an amount of components and/or raw materials required to assemble the product and/or a number of errors made when assembling the product.

In other words, the resources can be any quantity that allows determining whether a preliminary instruction set is performant or not. The lower the required resource is, the better the preliminary instruction set.

According to a further embodiment, the assembly assistance device further comprises an input device for receiving input data indicating a state of the user, the state of the user including the user's gender, age, job position, size, fitness level, potential handicaps, experience in product assembly and/or tiredness, wherein the artificial intelligence method indicates a correlation between the state of the user and the amount of resources and wherein the assistance device is configured to determine the optimized assembly instruction set based on the input data using the correlation between the state of the user and the amount of resources indicated by the artificial intelligence method.

The optimized assembly instruction set may be adjusted to a current condition of the user, thereby increasing the efficiency and reliability of the assembly even further. For example, a user who is tired may get a simpler optimized assembly instruction set (even if the assembly time is longer overall), allowing him to reduce his number of errors as compared to a more complex assembly instruction set (with a shorter assembly time).

Preferably, the state of the user is a parameter used as an input when training the artificial intelligence method so that the trained artificial intelligence method can account for the state of the user when determining the optimized assembly instructions. The trained artificial intelligence method may indicate how a particular state of the user is correlated with the required amount of resources and/or with the reward. For example, the decision tree may perform different predictions based on the state of the user.

According to a further embodiment, the assistance device is configured to determine an optimized assembly instruction set for different settings corresponding to the input data, wherein each optimized assembly instruction set is determined such that for the corresponding setting, the amount of resources required when assembling the product according to the optimized assembly instruction set is reduced.

Instead of determining an optimized assembly instruction set for a given set of input data, the general optimized assembly instruction set with different possible settings may be determined. The setting may be determined depending on the input data.

In particular, for each possible input data category (such as "very tired", "a little tired", "not tired" or "apprentice", "experienced worker"), a different setting of the optimized assembly instruction set is generated and stored by the assistance device. When provided with the input data, the assistance device provides the user with the optimized assembly instruction set setting corresponding to the input data.

In particular, different settings of the optimized assembly instructions may be selected depending on the state of the user. Different states of the user can lead to different optimized instruction sets. Preferably, the artificial intelligence method is capable of selecting the most appropriate setting of the optimized assembly instructions based on the state of the user. "Most appropriate" in particular means the setting of the optimized assembly instructions which leads to the highest reward (for example taking into account the number of components to be assembled, the predicted assembly duration or the like) for a given state of the user.

According to a further embodiment, the assembly assistance device comprises a database device for storing the preliminary instruction sets from the generation device in conjunction with their respective sensor data from the sensor device.

In particular, the database device is accessible by the generation device, the sensor device and the assistance device. It provides information about the entire assembly instruction optimization process, which can be used to train new assembly instruction devices, for example. In particular, sensor data relating to each assembly step (for different preliminary instruction sets and the optimized assembly instruction set) may be stored in the database device. The generation device, the sensor device and the assistance device may merely be connected to each other via the database device. In particular, any form of (indirect) communication between the three devices may be performed through retrieving data from and storing data to the database device.

According to a further embodiment, the generation device is configured to generate the plurality of preliminary instruction sets based on data describing previously observed assemblies, based on instructions input by a user, and/or randomly.

In particular, the generation device can generate the preliminary instruction sets by following observed assemblies (based on product data corresponding to observations made on previous and/or different assembly processes). The generation of the preliminary instruction sets can also be performed using a simulator, a digital twin or the like. In the case of random generation, the number of steps and the exact instructions at each assembly step can be randomly selected from prestored product data.

According to a further embodiment, the generation device can be configured to generate the plurality of preliminary instruction sets using a reinforcement learning algorithm.

In this reinforcement learning algorithm, the generation device may receive a list of available resources, available components and/or existing instruction sets. Based on sensor data observed during the generation of the instruction set, a negative reward is assigned for high cost of available resources while a positive reward is assigned for a high diversity of generated instruction sets.

An order in which a preliminary instruction set is chosen for accordingly assembling the product may be determined in accordance with a number of times that each preliminary instruction set was assembled, by which operator and the like. This allows ensuring that sensor data is measured on all preliminary instruction sets to ensure diversity of the data used for training the artificial intelligence method.

According to a second aspect, an assembling device including the assembly assistance device according to the first aspect or according to an embodiment thereof is provided. The assembling device is configured to perform the assembly according to each of the plurality of preliminary assembly instruction sets and according to the optimized assembly instruction set.

The embodiments and features described with reference to the assembly assistance device according to the first aspect or according to an embodiment thereof apply mutatis mutandis to the assembling device of the second aspect.

According to an embodiment, the assembling device is a pick-to-beamer device comprising a plurality of storage devices for holding the components and a projector device for projecting assembly instructions according to the optimized assembly instruction set on the pick-to-beamer device.

The pick-to-beamer device is an assembling device which assists the user in assembling the product. An example of a pick-to-beamer device is shown in EP 3 647 890 A1.

According to a third aspect, a method for providing a user and/or an assembling device with an assembly instruction set is provided, the assembly instruction set defining steps of an assembly process according to which the user and/or the assembling device is configured to assemble components into a product. The method comprises:
generating a plurality of preliminary instruction sets based on product data indicating a type and amount of at least some of the components to be assembled into the product, each preliminary instruction set defining a different assembly process for assembling the components into the product;
measuring sensor data characterizing the assembly process of the components into the product according to each respective preliminary instruction set from the plurality of preliminary instruction sets; and
using an artificial intelligence method to analyze an amount of resources required to assemble the components into the product according to each respective preliminary instruction set based on the sensor data and to select an optimized assembly instruction set from the preliminary instruction sets and the corresponding analysis of the required amount of resources such that an amount of resources required when assembling the product according to the optimized assembly instruction set is reduced.

The embodiments and features described with reference to the assembly assistance device according to the first aspect or according to an embodiment thereof apply mutatis mutandis to the method of the third aspect.

According to an embodiment, the method of the third aspect is executed on the assembly assistance device according to the first aspect or according to an embodiment thereof.

According to a further embodiment, the steps of generating, measuring and using an artificial intelligence method are repeatedly performed.

According to a further aspect, the invention relates to a computer program product comprising instructions which, when the program is executed by a computer, cause the computer to carry out the above-described method according to the third aspect or according to an embodiment thereof.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an assembly assistance device according to a first embodiment;
- Fig. 2: shows an example of an assembling device used by a user;
- Fig. 3: shows a method for providing an assembly instruction set;
- Fig. 4: shows an example for preliminary instruction sets;
- Fig. 5: shows an example of product data;
- Fig. 6: shows an assembly assistance device according to a second embodiment;
- Fig. 7: shows the generation of preliminary instructions sets (step S1) in detail;
- Fig. 8: shows the measurement of sensor data (step S2) in detail;
- Fig. 9: shows the generation of the optimized assembly instruction set (step S3) in detail;
- Fig. 10: shows an interaction between the devices from the assembly assistance device and the assembling device;
- Fig. 11: shows an assembly assistance system; and
- Fig. 12: shows an example of a decision tree generated by the assistance device.

In the Figures, like reference numerals designate like or functionally equivalent elements, unless otherwise indicated.

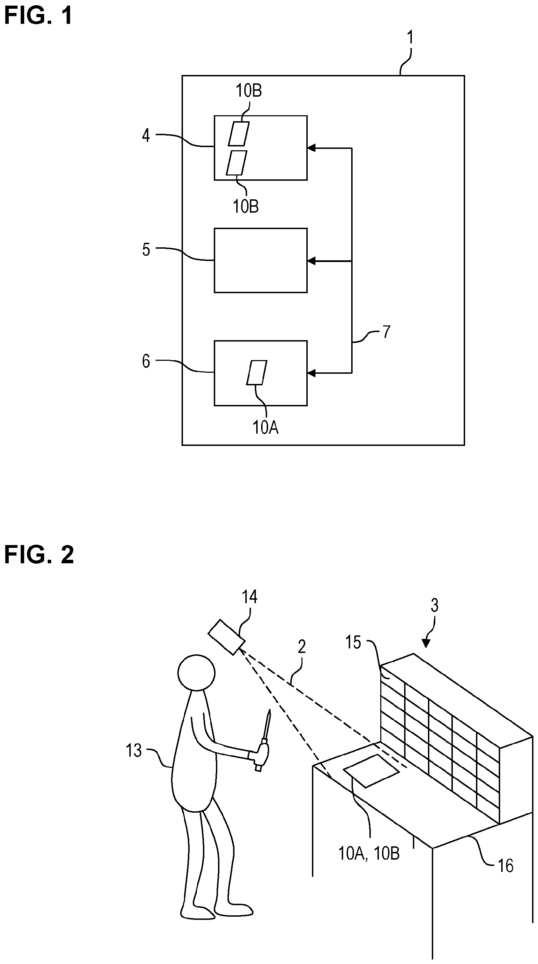

Fig. 1 shows an assembly assistance device 1 according to a first embodiment. The assembly assistance device 1 includes a generation device 4, a sensor device 5 and an assistance device 6. The generation device 4, the sensor device 5 and the assistance device 6 communicate with each other via a communication channel 7.

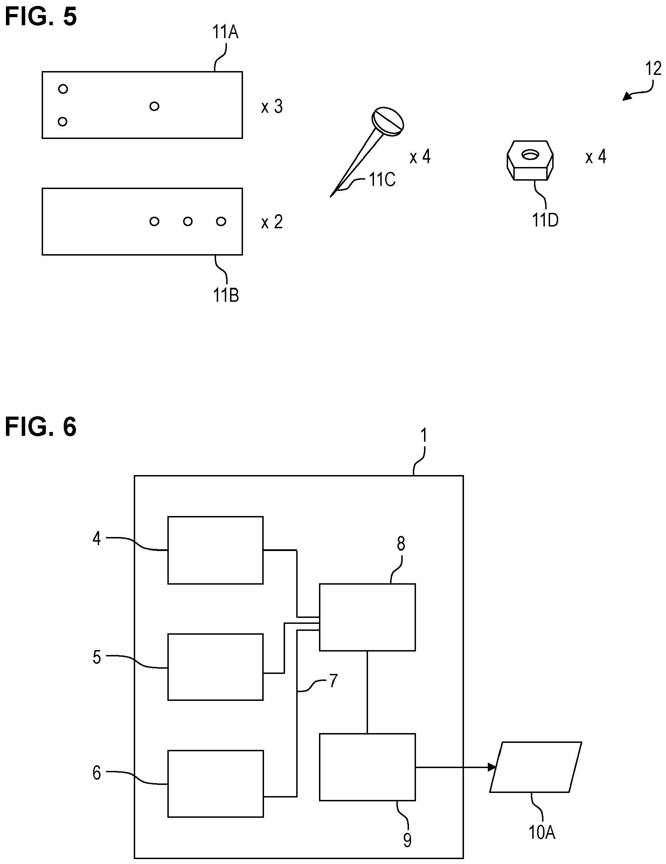

The assembly assistance device 1 is configured to provide a user 13 and an assembling device 3 (shown in Fig. 2) with an assembly instruction set 10A, 10B. In the example of Fig. 2, the assembling device 3 is a pick-to-beamer device. Such a pick-to-beamer device 3 is a workbench including storage devices 15 formed as compartments for holding components 11A - 11D shown in Fig. 5 and a work table 16 for assembling the components 11A - 11D into a product by the user 13. The pick-to-beamer device 3 includes a projector 14 for projecting the assembly instruction set 10A, 10B provided by the assembly instruction device 1 in a user-readable format step by step onto the work table 16 using light beams 2. In the user-readable format, the projected instruction set 10A, 10B includes a text, an image and/or a video. Thereby, the user 13 gets the assembly instructions 10A, 10B projected step by step and can accordingly assemble the components 11A - 11D into the product.

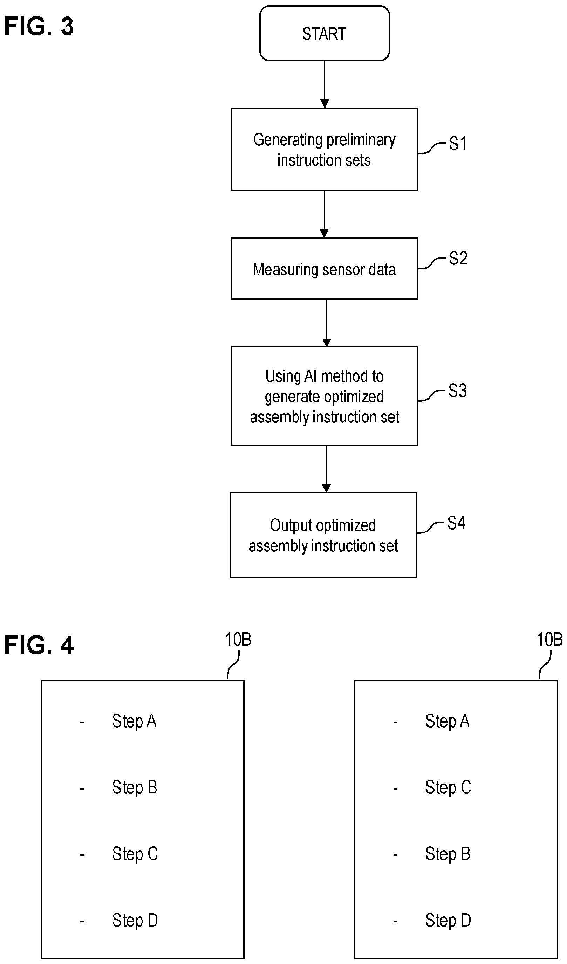

In order to generate the assembly instruction set 10A, 10B, the assembly assistance device 1 of Fig. 1 may follow the method shown in Fig. 3, which shows a method for providing an assembly instruction set. In the following, the functionalities of the generation device 4, the sensor device 5 and the assistance device 6 of Fig. 1 will be described in conjunction with Fig. 3.

In a step S1, the generation device 4 generates preliminary instruction sets 10B. The preliminary instructions sets 10B are assembly instruction sets. Fig. 4 shows an example with two such preliminary instruction sets 10B. The preliminary instruction sets 10B both comprise four assembly steps labelled A - D. The only difference between the two instruction sets 10B is the order in which the steps B and C are performed. Although not shown in Fig. 4, the preliminary instruction sets 10B further include information about each assembly step A - D. In particular, the information about each assembly step A - D for example includes which components 11A - 11D are assembled, how they are held and positioned with respect to each other, and/or which fixing means are used (screw, glue or the like).

In order to generate the preliminary instruction sets 10B, the generation device 4 takes into account product data 12 retrieved from a database device 8 (described further below) or received from the user 13. Such product data 12 is for example shown in Fig. 5. In Fig. 5, the product data 12 includes a listing of all components 11A - 11D available, including their amount, as well as an indication on the final product to be assembled (not shown in Fig. 5). Components 11A and 11B are metal sheets with through-holes at different locations. Component 11C is a screw and component 11D is a corresponding nut.

In a step S2, the sensor device 5 measures sensor data characterizing the assembly process of the components 11A - 11D into the product according to each respective preliminary instruction set 10B generated by the generation device 4. In other words, the respective preliminary instruction sets 10B generated by the generation device 4 are tested by the user 13, who assembles the components 11A - 11D according to the respective preliminary instruction sets 10B projected onto the pick-to-beamer 3. Meanwhile, the sensor device 5 observes the assembly procedure.

To this end, the sensor device 5 includes a video camera which films the assembly procedure. The sensor device 5 may optionally be equipped with an analysis tool for analyzing the filmed assembly process, in particular for cutting it into sections corresponding to different assembly steps, measuring a time taken for each assembly step and/or recognizing errors in each assembly step. The sensor device 5 may store the processed or unprocessed sensor data in a database device (described further below). It is particularly advantageous to store analyzed data as text data or as a table to reduce a required storage capacity. The sensor device 5 may store the sensor data in a classified manner (for example, using labels or appropriate file names) to facilitate analysis of the sensor data. Preferably, the assembly process using each preliminary instruction set 10B is performed multiple time in order to obtain a large and representative amount of sensor data.

In a step S3, the assistance device 6 generates an optimized assembly instruction set 10A using an artificial intelligence method which is here a machine learning method. To this end, the assistance device 6 first gathers the sensor data from the sensor device 5 and analyses it to determine which preliminary instruction sets 10B gave particularly good product assembly results regarding an assembly time, a number of assembly errors and/or an assembly quality. These indicators of the product assembly result are expressed as an amount of resources.

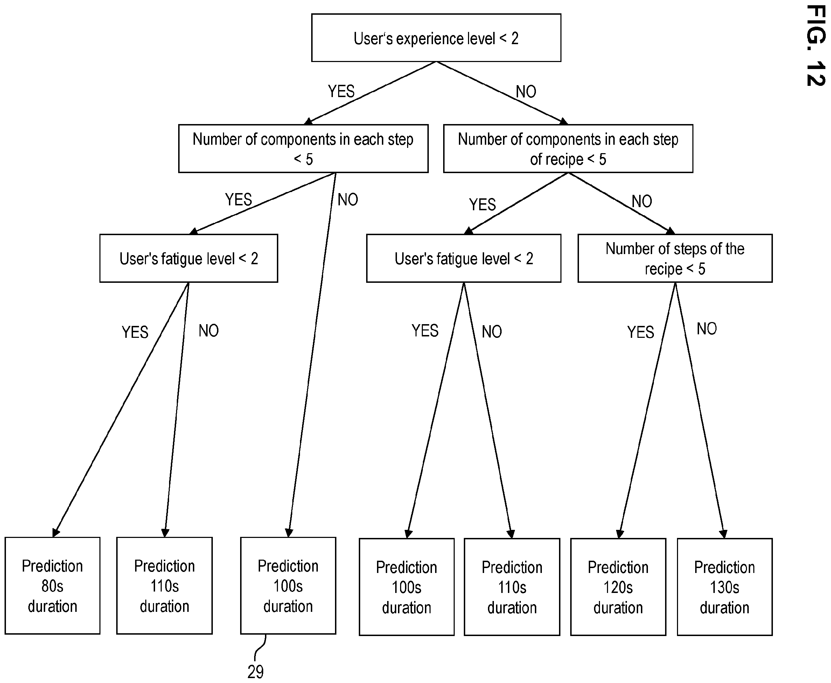

Based on the amount of resources required for each preliminary instruction set, the assistance device 6 generates the optimized assembly instruction set 10A. Usually, the optimized assembly instruction set 10A is one of the preliminary instruction sets 10B generated by the generation device 10B. In this case, the optimized assembly instruction set 10A is the preliminary assembly instruction set which shows the best results regarding the amount of resources and reduces an overall use of resources (shorter assembly time, less errors and the like) . Fig. 12 (described below) shows an example of a decision tree used to select/generate the optimized assembly instruction set 10A.

In a step S4 (optional), the assembly assistance device 1 outputs the optimized assembly instruction set 10A. For example, the optimized assembly instruction set 10A is transmitted wirelessly to the projector 14 for projecting the optimized assembly instruction set 10A step after step onto the pick-to-beamer 3 for the user 13 to accordingly assemble the components 11A - 11D into the product.

To facilitate the outputting of the optimized assembly instruction set 10A and of the preliminary instruction sets 10B, the assembly assistance device 1 can further comprise an output device 9. Such an assembly assistance device 1 is shown in Fig. 6. The assembly assistance device 1 of Fig. 6 further includes a database device 8 for respectively storing input and output data of the generation device 4, the sensor device 5 and the assistance device 6. The database device 8 may be a remotely accessible cloud storage or the like. The database device 8 in particular stores the preliminary instruction sets 10B, the sensor data, the product data 12, the optimized assembly instruction set 10A and the like. The assembly assistance device 1 of Fig. 6 is equally configured to perform the method of Fig. 3.

Steps S2 and S3 or steps S1, S2 and S3 can be iteratively and repeatedly performed such as to increase the amount of analyzed data and optimized the optimized assembly instruction set 10A even further.

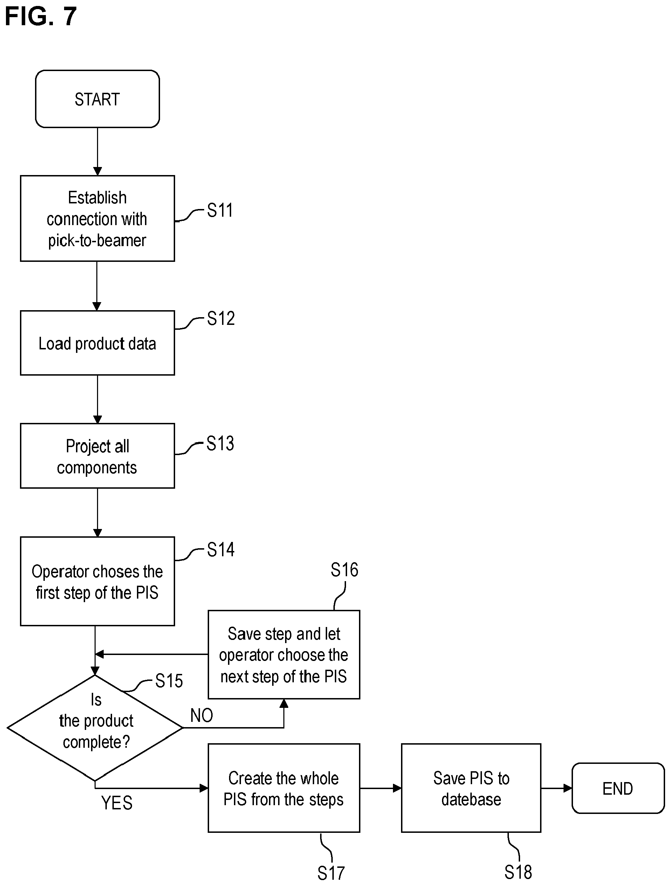

Fig. 7 shows the generation of preliminary instructions sets (step S1) in greater detail. Steps S11 to S18 of Fig. 7 are all performed by or using the generation device 4.

In step S11, the generation device 4 establishes a communicative connection with the pick-to-beamer 3, for example using the communication channel 7. In a step S12, the generation device 4 loads the product data 12 from the database device 8. In step S13, the generation device 4 sends a list of all components 11A - 11D, which is obtained from the product data 12, to the pick-to-beamer 3, which projects the list of components 11A - 11D using the projector 14.

In step S14, the user (operator) 13 selects a first assembly step of a first preliminary instruction set 10B ("PIS" in Fig. 7). To this end, the user 13 may use a computer and/or a touch screen. In step S15, it is determined whether the assembly step(s) selected in step S14 allow assembling the entire product or not. If not ("NO" in step S15), the current step (from step S14) is stored and the user chooses the subsequent assembly step (S16). Steps S15 and S16 are repeated until completion of the product ("YES" in S15), which results in the creation of a whole preliminary instruction set 10B (S17), which is then saved in the database device 8 (S18).

The method of Fig. 7 can be repeated to determine multiple preliminary instruction sets 10B. Alternatively or in conjunction to the method of Fig. 7, the generation device 4 may generate preliminary instruction sets 10B entirely or partly autonomously, for example randomly or based on reinforcement learning.

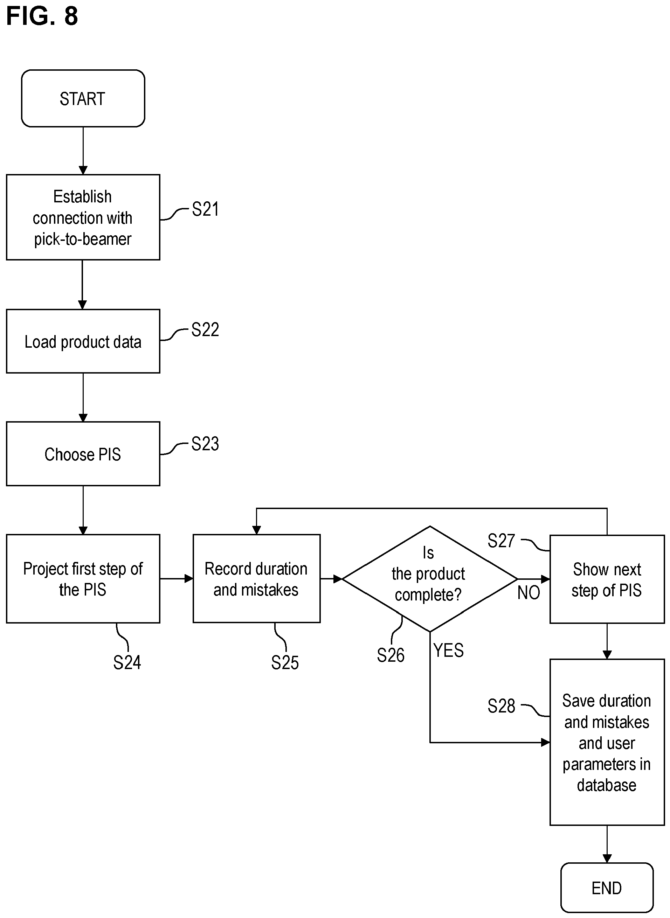

Fig. 8 shows the measuring of sensor data (step S2) in greater detail. Steps S21 to S28 of Fig. 8 are all performed by or using the sensor device 5. In step S21, the sensor device 5 establishes a communicative connection with the pick-to-beamer 3, for example using the communication channel 7. In a step S22, the sensor device 5 loads the product data 12 from the database device 8 to be able to classify the sensor data, for example.

In step S23, the sensor device 5 chooses one of the preliminary instruction sets 10B. When generating the preliminary instruction sets 10B, it is possible that the generation device 4 generates a same preliminary instruction set 10B multiple times. In this case, the probability of the preliminary instruction set 10B generated multiple times as being good (in terms of reduced resources) is already increased and it satisfies an initial statistical significance requirement. Such a preliminary instruction set 10B is preferably considered and chosen in step S33.

In step S24, the sensor device 5 sends the first assembly step of the preliminary assembly instruction 10B selected in step S23 to the pick-to-beamer 3, which projects this assembly step using the projector 14. In step S25, the sensor device 5 observes the assembly of the components 11A -11D according to the projected assembly step and records an assembly duration and potential errors.

In step S26, the sensor device 5 determines whether the entire product has been assembled. If not ("NO" in step S26), the next assembly step is projected (S27) and corresponding sensor data is captured (S26). Once the product is completed ("YES" in step S26), the measured sensor data is stored in the database (S28). The sensor data is here stored together with input data input by the user 13 and indicating a state of the user 13, such as his tiredness, how long he has been working on product assembly, and the like. Further, in step S28, the statistical significance of the measured preliminary instruction set 10B can be updated based on the sensor data.

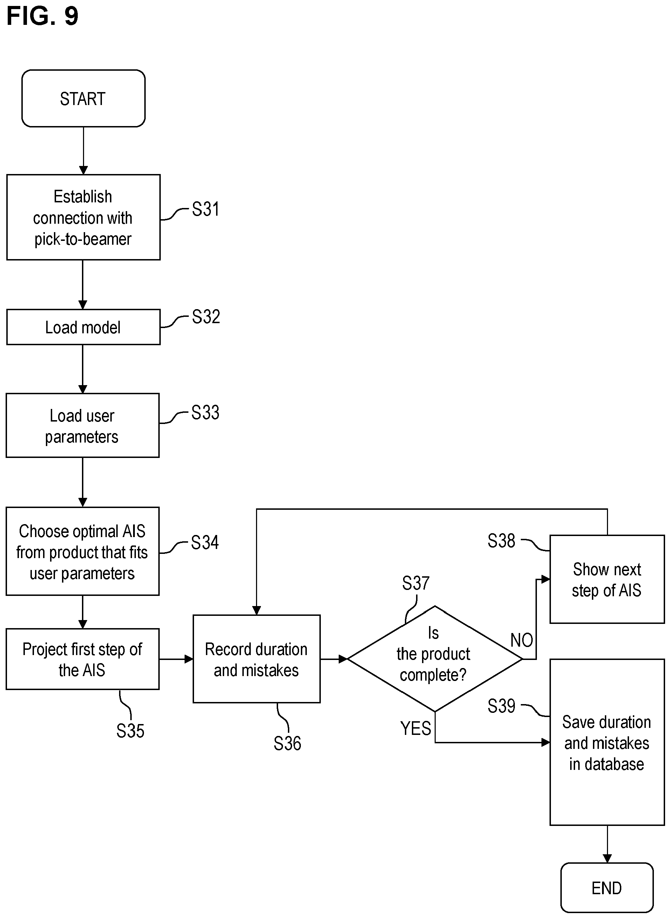

Fig. 9 shows the generation of the optimized assembly instruction set 10A by the assistance device 6 in greater detail. Steps S31 to S39 of Fig. 9 are all performed by or using the assistance device 6. In step S31, the assistance device 6 establishes a communicative connection with the pick-to-beamer 3, for example using the communication channel 7.

In a step S32, the trained assistance device model is loaded. This included retrieving the sensor data and the preliminary instruction sets 10B from the database device 8. In a step S33, the assistance device 6 loads user parameters ("input data") from a current user 13.

In a step S34, the assistance device 6 determines which preliminary instruction set 10B is best for the current user 13 using the artificial intelligence method and based on the criteria described above. This selected preliminary instruction set 10B is the optimized assembly instruction set 10A.

In step S35, the assistance device 6 sends the first assembly step of the optimized assembly instruction set 10A selected in step S34 to the pick-to-beamer 3, which projects the assembly step using the projector 14. In step S36, the sensor device 5 observes the assembly of the components 11A -11D according to the projected assembly step and records an assembly duration and potential errors.

In step S37, the assistance device 6 determines whether the entire product has been assembled. If not ("NO" in step S37), the next assembly step is projected (S38) and corresponding sensor data is captured (S36). Once the product is completed ("YES" in step S37), the measured sensor data is stored in the database (S39). This allows improving the optimized assembly instruction set 10A.

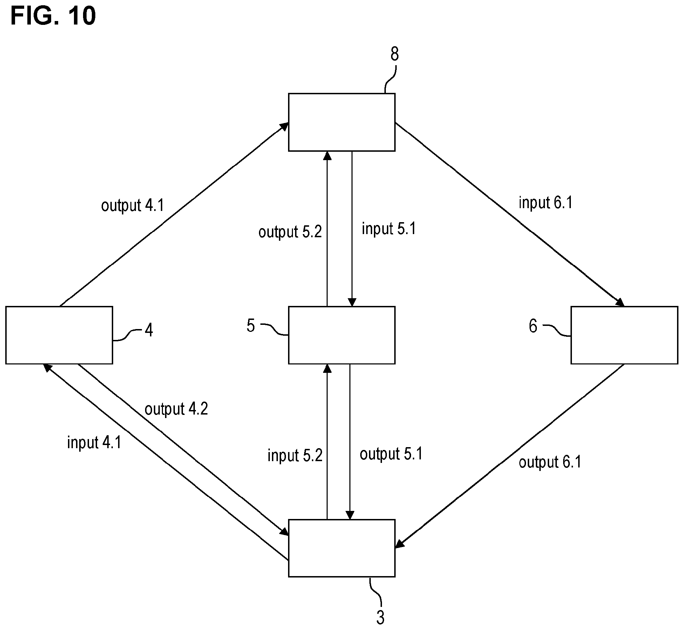

Fig. 10 shows an interaction between the database device 8, the pick-to-beamer 3 and the generation device 4, the sensor device 5 and the assistance device 6. As shown in Fig. 10, the generation device 4, the sensor device 5 and the assistance device 6 do not directly communicate with each other. Rather, they are only linked through the database device 8 and the pick-to-beamer 3, thereby optimizing resources used by the generation device 4, the sensor device 5 and the assistance device 6.

In Fig. 10, input 4.1 of the generation device 4 designates a new assembly instruction set received from the pick-to-beamer 3, output 4.2 from the generation device 4 designates the projection of all components 11A- 11D on the pick-to-beamer and output 4.1 from the generation device 4 designates a generated preliminary instruction set to be stored in the database device 8.

Further, input 5.1 and output 5.1 of the sensor device 5 comprise a preliminary instruction set 10B to be measured and input 5.2 and output 5.2 comprise a corresponding sensor data. Moreover, input 6.1 of the generation device 6 is the reception of the sensor data from the database device 8 and output 6.1 is the provision of the optimized assembly instruction set 10A to the pick-to-beamer. Since all the inputs and output of Fig. 10 have been previously described, we refer to the above for a more detailed description.

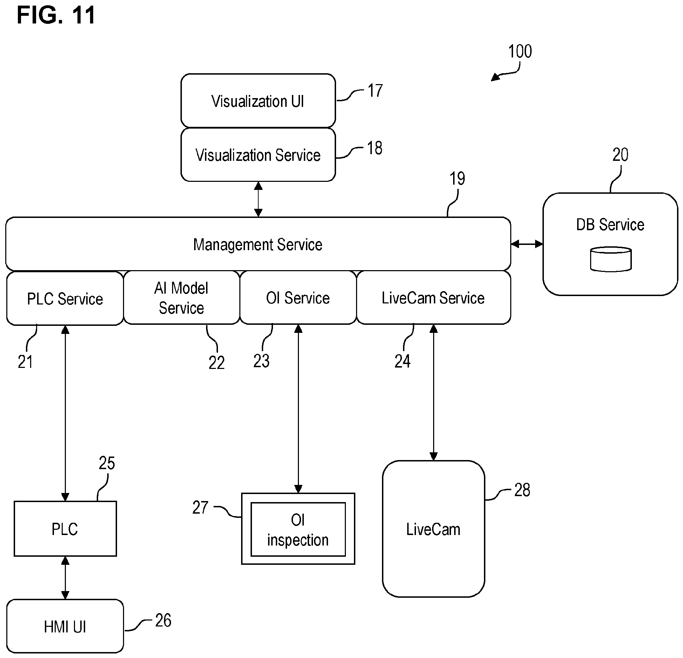

Fig. 11 shows an assembly assistance system 100. This assembly assistance system 100 includes a visualization user interface 17, a visualization service 18, a management service 12, a database (DB) service 20, a programmable logic controller (PLC) service 21, an AI model service 22 including the generation device 4, the sensor device 5 and the assistance device 6, an optical inspection (OI) service 23, a live camera (LiveCam) service 24, a PLC 25, a human machine interface user interface (HMI UI) 26, an OI inspection 27 and a live camera 28. The database service 20 corresponds to the above-described database device 8 and is used by the generation device 4, the sensor device 5 and the assistance device 6 to store and use data. The HMI UI 26 is used to select the mode (generation device 4, sensor device 5 or assistance device 6) by a user 13.

In the generation step S1, the following units of the assembly assistance system 100 are used. When there is no user 13 to generate the preliminary instruction sets 10B, a digital twin device (not shown) using a trained reinforcement algorithm generates new preliminary instruction sets 10B. The OI inspection 27 verifies whether the generated preliminary instruction sets 10B are correct. The DB service 20 stores the preliminary instruction sets 10B.

When there is a user 13 creating a preliminary instruction set 10B, the generation device 4 uses the LiveCam 28 and the LiveCam service 24 to track the creation of the preliminary instruction set 10B by the user 13. The HMI UI 26 can be used by the user 13 to indicate steps of the created preliminary instruction set 10B. The OI inspection 27 verifies whether the generated preliminary instruction sets 10B are correct. The DB service 20 stores the preliminary instruction sets 10B.

In the sensor data measurement step S2, the following units of the assembly assistance system 100 are used. A selected preliminary instruction set 10B is drawn from the DB service 20. The LiveCam 28 or the HMI UI 26 gets as an input the input data (user characteristics) or characteristics of the robots. The LiveCam 28 records assembly events. The OI inspection 27 determines whether the preliminary instruction set 10B is correct based on the recording by the LiveCam 28. The assembly events are stored in the DB service 20.

In the assistance step S3, the following units of the assembly assistance system 100 are used. The LiveCam 28 or the HMI UI 26 get as an input the input data (user characteristics) or characteristics of the robots. Using the model stored in the DB service 20 in step S2, the optimal assembly instruction set 10A is determined. The LiveCam 28 records assembly events following the optimal assembly instruction set 10A. The OI inspection 27 determines whether the optimized assembly instruction set 10A is correct based on the recording by the LiveCam 28. The assembly events are stored in the DB service 20.

Fig. 12 shows an example of a decision tree generated by the assistance device 6 in step S3, from which the assistance device 6 then selects the optimized assembly instruction set 10A. In the example of Fig. 12, the instruction sets 10A, 10B are characterized by the number of components 11A - 11D in the instruction set 10A, 10B and by the number of steps in the instruction set 10A, 10B. The input data characterizing the user 13 includes the user's experience and his fatigue. In steps S1 and S2 leading to the decision tree of Fig. 12, preliminary instruction sets 10B were generated and sensor data was collected.

In step S3, an artificial intelligence model (here a decision tree) is trained. The decision tree is generated in a learning phase of the artificial intelligence model based on preliminary instructions sets, corresponding sensor data, corresponding amounts of resources and corresponding states of the user and input data. An assembly duration for the different configurations (number of components 11A - 11D, number of steps in the instruction set 10A, 10B, user's experience and user's fatigue) can be predicted using the decision tree (bottom line of the decision tree of Fig. 12).

The decision tree of Fig. 12 is specific to one of the preliminary instruction sets 10B. Similar decision trees may be trained for each of the preliminary instruction sets 10B. Each decision tree can then be used to determine, based on the state of the user 13 and on a desired number of components, an assembly duration (which is an amount of resources) of the corresponding preliminary instruction set 10B. This allows determining, for each preliminary instruction set 10B, an assembly duration. The optimized assembly instruction set 10A can then be determined as the preliminary instruction set 10B leading to the shortest assembly duration, for example.

The assembly duration of a particular preliminary instruction set 10B for a user 13 is determined based on the input data indicating the state of the user 13 (experience level and fatigue) by following the corresponding path (route) in the decision tree. For example, if a user 13 has an experience level above two and if there are less than five components 11A - 11D in each step, the decision tree follows the path from the top of the decision tree to the box 29 labeled "prediction: 100s duration".

Although the present invention has been described in accordance with preferred embodiments, it is obvious for the person skilled in the art that modifications are possible in all embodiments. For example, the type and number of components 11A - 11D can depart from those shown in Fig. 5. The number and content of the assembly instruction sets 10A, 10B may vary. Instead of being assembled by a user 13 assisted by a pick-to-beamer 3, the user 13 may be assisted by a different type of assembling device 3 or the components may be assembled into the product partly or entirely autonomously, for example using a robot the like. The algorithms used for generating the preliminary instruction sets 10B and the optimized assembly instruction set 10A are not limited to the above. For example, the preliminary instruction sets 10B can be issued randomly.

### REFERENCE NUMERALS

- 1: assembly assistance device
- 2: light beam/projection
- 3: assembling device
- 4: generation device
- 5: sensor device
- 6: assistance device
- 7: communication channel
- 8: database device
- 9: output device
- 10A: optimized assembly instruction set
- 10B: preliminary assembly instruction set
- 11A - 11D: component
- 12: product data
- 13: user
- 14: projector
- 15: storage device
- 16: work table
- 17: visualization user interface
- 18: visualization service
- 19: management service
- 20: database service
- 21: PLC service
- 22: AI model service
- 23: optical inspection service
- 24: live camera service
- 25: PLC
- 26: HMI user interface
- 27: optical inspection
- 28: live camera
- 29: box
- 100: system
- S1 - S39: method steps

## Claims

1. An assembly assistance device (1) for providing a user (13) and/or an assembling device (3) with an assembly instruction set, the assembly instruction set defining a sequence of assembly steps of an assembly process according to which the user (13) and/or the assembling device (3) is configured to assemble components (11A - 11D) into a product, the assembly assistance device (1) comprising:
a generation device (4) configured to generate a plurality of preliminary instruction sets (10B) based on product data (12) indicating a type and amount of at least some of the components (11A - 11D) to be assembled into the product, each preliminary instruction set (10B) defining a different assembly process for assembling the components (11A - 11D) into the product;
a sensor device (5) configured to measure sensor data characterizing the assembly process of the components (11A - 11D) into the product according to each respective preliminary instruction set (10B) from the plurality of preliminary instruction sets (10B); and
an assistance device (6) configured to use an artificial intelligence method to analyze an amount of resources required to assemble the components (11A - 11D) into the product according to each respective preliminary instruction set (10B) based on the sensor data and to select an optimized assembly instruction set (10A) from the preliminary instruction sets (10B) and the corresponding analysis of the required amount of resources such that an amount of resources required when assembling the product according to the optimized assembly instruction set (10A) is reduced.

2. The assembly assistance device according to claim 1, wherein the artificial intelligence method includes a trained decision tree and/or a reward calculation for determining the amount of resources required to assemble the components (11A - 11D) into the product according to each respective preliminary instruction set (10B), and wherein the artificial intelligence method determines the optimized assembly instruction set (10A) as the preliminary instruction set (10B) for which the determined amount of resources is minimum and/or lower than a predetermined threshold.

3. The assembly assistance device according to claim 1 or 2, wherein the assistance device (6) is configured to select the optimized assembly instruction set (10A) by selecting the preliminary instruction set (10B) which requires the smallest amount of resources when compared to all other preliminary instruction sets (10B) from the plurality of preliminary instruction sets (10B).

4. The assembly assistance device according to one of claims 1 to 3, further comprising an output device (9) for outputting the optimized assembly instruction set (10A) to the user (13) and/or the assembling device (3).

5. The assembly assistance device according to one of claims 1 to 4, wherein
the sensor device (5) is configured to measure further sensor data characterizing an assembly of the components (11A - 11D) according to the optimized assembly instruction set (10A) and the assistance device (6) is configured to update the optimized assembly instruction set (10A) based on the further sensor data collected by the sensor device (5); and/or
the generation device (4) is configured to generate an additional preliminary assembly instruction set, the sensor device (5) is configured to collect additional sensor data characterizing an assembly of the components (11A - 11D) according to the additional preliminary instruction sets (10B) and the assistance device (6) is configured to update the optimized assembly instruction set (10A) based on the additional preliminary assembly instruction set and on the additional sensor data collected by the sensor device (5).

6. The assembly assistance device according to one of claims 1 to 5, wherein the sensor data collected by the sensor device (5) is an image, a video and/or a duration of one or multiple steps of the assembly of the components (11A - 11D) according to each respective preliminary instruction set (10B) from the plurality of preliminary instruction sets (10B).

7. The assembly assistance device according to one of claims 1 to 6, wherein the resources include: an assembly time for assembling the product, an amount of electrical energy required to assembly the product, an amount of components (11A - 11D) and/or raw materials required to assemble the product and/or a number of errors made when assembling the product.

8. The assembly assistance device according to one of claims 1 to 7, further comprising an input device for receiving input data indicating a state of the user (13), the state of the user (13) including the user's gender, age, job position, size, fitness level, potential handicaps, experience in product assembly and/or tiredness, wherein the artificial intelligence method indicates a correlation between the state of the user (13) and the amount of resources and wherein the assistance device (6) is configured to determine the optimized assembly instruction set (10A) based on the input data using the correlation between the state of the user (13) and the amount of resources indicated by the artificial intelligence method.

9. The assembly assistance device according to claim 8, wherein the assistance device (6) is configured to determine an optimized assembly instruction set (10A) for different settings corresponding to the input data, wherein each optimized assembly instruction set (10A) is determined such that for the corresponding setting, the amount of resources required when assembling the product according to the optimized assembly instruction set (10A) is reduced.

10. The assembly assistance device according to one of claims 1 to 9, further comprising a database device (8) for storing the preliminary instruction sets (10B) from the generation device (4) in conjunction with their respective sensor data from the sensor device (5).

11. The assembly assistance device according to one of claims 1 to 10, wherein the generation device (4) is configured to generate the plurality of preliminary instruction sets (10B) randomly, based on data describing previously observed assemblies and/or based on instructions input by a user (13).

12. An assembling device (3) including the assembly assistance device (1) according to one of claims 1 to 11, the assembling device (3) being configured to perform the assembly according to each of the plurality of preliminary assembly instruction sets and according to the optimized assembly instruction set (10A).

13. The assembling device according to claim 12, wherein the assembling device (3) is a pick-to-beamer device comprising a plurality of storage devices for holding the components (11A - 11D) and a projector device for projecting assembly instructions according to the optimized assembly instruction set (10A) on the pick-to-beamer device.

14. A method for providing a user (13) and/or an assembling device (3) with an assembly instruction set, in particular using the assembly assistance device (1) according to one of claims 1 to 13, the assembly instruction set defining steps of an assembly process according to which the user (13) and/or the assembling device (3) is configured to assemble components (11A - 11D) into a product, the method comprising:
generating (S1) a plurality of preliminary instruction sets (10B) based on product data (12) indicating a type and amount of at least some of the components (11A - 11D) to be assembled into the product, each preliminary instruction set (10B) defining a different assembly process for assembling the components (11A - 11D) into the product;
measuring (S2) sensor data characterizing the assembly process of the components (11A - 11D) into the product according to each respective preliminary instruction set (10B) from the plurality of preliminary instruction sets (10B); and
using (S3) an artificial intelligence method to analyze an amount of resources required to assemble the components (11A - 11D) into the product according to each respective preliminary instruction set (10B) based on the sensor data and to select an optimized assembly instruction set (10A) from the preliminary instruction sets (10B) and the corresponding analysis of the required amount of resources such that an amount of resources required when assembling the product according to the optimized assembly instruction set (10A) is reduced.

15. The method according to claim 14, wherein the steps of generating (S1), measuring (S2) and using (S3) an artificial intelligence method are repeatedly performed.
